# EUROPÄISCHE PATENTSCHRIFT

(11) **EP 1 285 725 B1**
(45) Veröffentlichungstag und Bekanntmachung des Hinweises auf die Patenterteilung: **20.07.2005**
(21) Anmeldenummer: 02012160.4
(22) Anmeldetag: 01.06.2002
(51) Int. Cl.: B23Q 39/02, B23Q 39/04, B23Q 7/03, B23Q 3/155

(54) **Drehmaschine für die allseitige Bearbeitung und geordnete Ablage von Werkstücken**
Lathe for the machining on all sides and systematic placement of workpieces
Tour pour l'usinage sur tous les côtés et le rangement ordonné de pièces

(30) Priorität: 21.08.2001 DE 10140940
(43) Veröffentlichungstag der Anmeldung: 26.02.2003
(73) Patentinhaber: Gildemeister Drehmaschinen GmbH, 33689 Bielefeld (DE)
(72) Erfinder: Denkena, Berend, 33415 Verl (DE)
(74) Vertreter: Elbertzhagen, Otto, Dipl.-Ing.

(56) Entgegenhaltungen:
- DE-A- 4 310 038
- DE-A- 19 515 043
- DE-A- 19 521 846
- US-A- 4 868 969

## Beschreibung

Die Erfindung betrifft eine Drehmaschine nach dem Oberbegriff des Patentanspruchs 1.

Eine Drehmaschine der als bekannt vorausgesetzten Art (DE 195 15 043 C2) weist eine in einem Werkzeugträger drehbar gehaltene Abgreifspindel auf, an der die Rückseite eines zuvor in einer Hauptspindel bearbeiteten Werkstücks durch die Werkzeuge eines weiteren Werkzeugträgers bearbeitet werden kann. In einer Ausführungsform schwenkt der die Abgreifspindel tragende Werkzeugträger um eine parallel zur Achse der Hauptspindel verlaufende Achse. Dieser Werkzeugträger ist mittels eines Kreuzschlittens in Richtung der Hauptspindelachse und quer dazu verfahrbar. Die Abgreifspindel und die Werkzeuge sind an der stets der Hauptspindel zugewandten Aufspannfläche des Werkzeugträgers angeordnet. Die Rotationsachse der Abgreifspindel bleibt in jeder Schaltlage des Werkzeugträgers horizontal.

Bei einer derartigen Anordnung muß bei einem automatischen Bearbeitungsablauf das allseitig fertig bearbeitete Werkstück von einer Werkstückhandhabungsvorrichtung, beispielsweise einem Roboter, aus der Abgreifspindel entnommen oder aus der Abgreifspindel ausgestoßen und in einem Auffangbehälter aufgefangen werden. Eine zusätzliche Werkstückhandhabungsvorrichtung ist aufwendig und teuer und lässt sich einer derartigen Drehmaschine nur schlecht zuordnen. Das Ausstoßen der fertig bearbeiteten Werkstücke in einen Auffangbehälter kann zu Beschädigungen der Oberfläche der Werkstücke führen, die das Werkstück unansehnlich oder sogar unbrauchbar machen. Die Zufuhr eines Rohteils mit Hilfe nur der Abgreifspindel ist bei dieser Drehmaschine überhaupt nicht möglich.

Es ist außerdem eine numerisch gesteuerte Bearbeitungsmaschine bekannt (DE 195 21 846 A1), bei der zwei um parallel zueinander verlaufende, horizontale Achsen schwenkbare Spindelstöcke vorgesehen sind, von denen jeder ein Spannfutter zur Aufnahme eines Werkstücks auf einer Seite und eine Werkzeugaufnahme auf der dem Spannfutter gegenüberliegenden Seite aufweist. Mindestens einer der Spindelstöcke ist in drei orthogonal zueinander verlaufenden Richtungen verfahrbar. Das Spannfutter dieses ersten Spindelstocks kann daher in eine Schaltlage geschwenkt werden, in der es nach unten weist. Es kann in dieser Lage vertikal nach unten verfahren werden, um ein Rohteil aufzunehmen oder ein fertig bearbeitetes Werkstück sanft und geordnet abzulegen. Außerdem kann das Spannfutter in einer anderen Schaltlage ein Werkstück an das Spannfutter des zweiten Spindelstocks übergeben oder aus diesem übernehmen.

Die Bearbeitungsmaschine hat den Nachteil, daß zur selben Zeit immer nur ein Werkstück mit einem Werkzeug bearbeitet werden kann. Dadurch verlängern sich die Bearbeitungszeiten erheblich. Insbesondere die Bearbeitung eines in dem Spannfutter des ersten Spindelstocks gehaltenen Werkstücks und die gleichzeitige Bearbeitung eines an dem zweiten Spindelstock gehaltenen Werkstücks durch ein Werkzeug des ersten Spindelstocks ist nicht möglich.

Ausgehend von dem zuerst genannten Stand der Technik liegt der Erfindung die Aufgabe zugrunde, eine Drehmaschine der als bekannt vorausgesetzten Art so auszubilden, daß sie neben einer allseitigen, vielfältigen und schnellen Bearbeitung der Werkstücke auch deren geordnete Ablage erlaubt.

Die Lösung dieser Aufgabe erfolgt mit den Merkmalen des Patentanspruchs 1.

Die Drehmaschine ist sowohl für die Komplettbearbeitung von Futterteilen als auch für die von Stangenabschnitten geeignet. Sie ermöglicht durch die Vorschubachsen des zweiten Werkzeugträgers über die reine Dreh- und zentrische Bohrbearbeitung hinaus auch andere Bearbeitungsverfahren. Es können beispielsweise Flächen angefräst oder außermittige Bohrungen unter beliebigem Winkel zur Drehachse durch Bohrwerkzeuge oder Laserstrahlen erzeugt werden. Durch die gesteuerte Vertikalbewegung der Abgreifspindel können Werkstücke unabhängig von ihrer Länge sanft und geordnet abgelegt oder Rohteile aufgenommen werden.

Bevorzugte Ausgestaltungen der Erfindung ergeben sich aus den Unteransprüchen.

Durch die Anordnung und Anzahl von bis zu vier unabhängigen Werkzeugträgern können bei einer bevorzugten Ausgestaltung insbesondere an der Hauptspindel auch mehrere Werkzeuge gleichzeitig eingesetzt werden. Darüber hinaus ist es möglich, ein von der Abgreifspindel gehaltenes Werkstück einem Bearbeitungswerkzeug zuzuführen und gleichzeitig mit einem Werkzeug des die Abgreifspindel tragenden Werkzeugträgers ein in der Hauptspindel gehaltenes Werkstück zu bearbeiten.

Nachstehend werden drei bevorzugte Ausführungsformen der Erfindung anhand der Zeichnungen im einzelnen beschrieben.

Es zeigen:
- Figur 1 -: eine perspektivische Ansicht der Basis einer Drehmaschine in schematischer Darstellung mit zwei stets vorhandenen Werkzeugträgern;

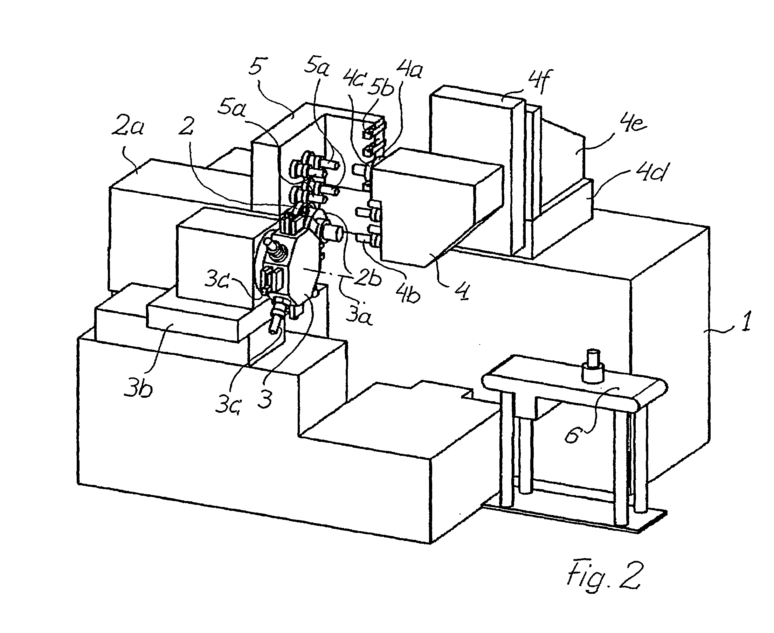

- Figur 2 -: eine perspektivische Darstellung der Drehmaschine nach Fig. 1 in einer ersten Ausführungsform mit drei Werkzeugträger;
- Figur 3 -: eine perspektivische Darstellung der Drehmaschine nach Fig. 1 in einer zweiten Ausführungsform mit vier Werkzeugträgern;
- Figur 4 -: die perspektivische Darstellung der Drehmaschine nach Fig. 3 mit einem Werkzeugträger in unterschiedlicher Schwenkposition;
- Figur 5 -: eine perspektivische Darstellung der Drehmaschine nach Fig. 4 mit dem Werkzeugträger in einer weiteren Schwenkposition;
- Figur 6 -: eine perspektivische Darstellung der Drehmaschine nach Fig. 1 in einer dritten Ausführungsform mit einem zusätzlichen Stechschlitten.

In den Zeichnungen sind gleiche Teile mit den gleichen Bezugszeichen versehen, die sich im Bedarfsfall durch Hochstriche voneinander unterscheiden.

Auf einem Maschinenbett 1 ist ein Spindelkasten 2a befestigt, in dem eine Hauptspindel 2 um eine Hauptspindelachse z' drehbar gelagert ist. An der Hauptspindel 2 ist ein Spannfutter 2b befestigt, in das ein zu bearbeitendes Werkstück einspannbar ist. Die Hauptspindel 2 ist in bekannter Weise von einem nicht dargestellten Antriebsmotor sowohl mit für die Drehbearbeitung geeigneter Drehzahl antreibbar als auch mit Vorschubgeschwindigkeit drehbar und in beliebigen Umfangswinkelstellungen positionierbar.

Neben dem Spindelkasten 2a ist auf dem Maschinenbett 1 ein erster Werkzeugträger 3 gelagert, der mittels eines Schlittens 3b quer und parallel zur Hauptspindelachse z' verschieblich ist. Der Werkzeugträger 3 ist als Revolver mit an seinem Umfang angeordneten Werkzeugen 3c ausgebildet und schaltet um eine horizontal und parallel zur Hauptspindelachse z' verlaufende Schaltachse 3a. Mindestens ein Werkzeug 3c kann ein Stechmeißel zum Abtrennen eines Werkstücks von einer Werkstoffstange sein.

Auf seiner Oberseite weist das Maschinenbett 1 parallel zur Hauptspindelachse z' verlaufende Führungen auf, die ebenfalls nicht dargestellt sind. Auf diesen Führungen ist ein als Z-Schlitten 4d und X-Schlitten 4e ausgebildeter Kreuzschlitten in einer horizontalen Ebene verfahrbar. An dem X-Schlitten 4e ist eine weitere, vertikal verlaufende, in den Zeichnungen nicht dargestellte Führungsbahn vorgesehen, die einen Y-Schlitten 4f verschieblich führt. An dem Y-Schlitten ist ein zweiter Werkzeugträger 4 um eine Schwenkachse A verschwenkbar gelagert. Die Schwenkachse B verläuft horizontal und quer zur Hauptspindelachse z'.

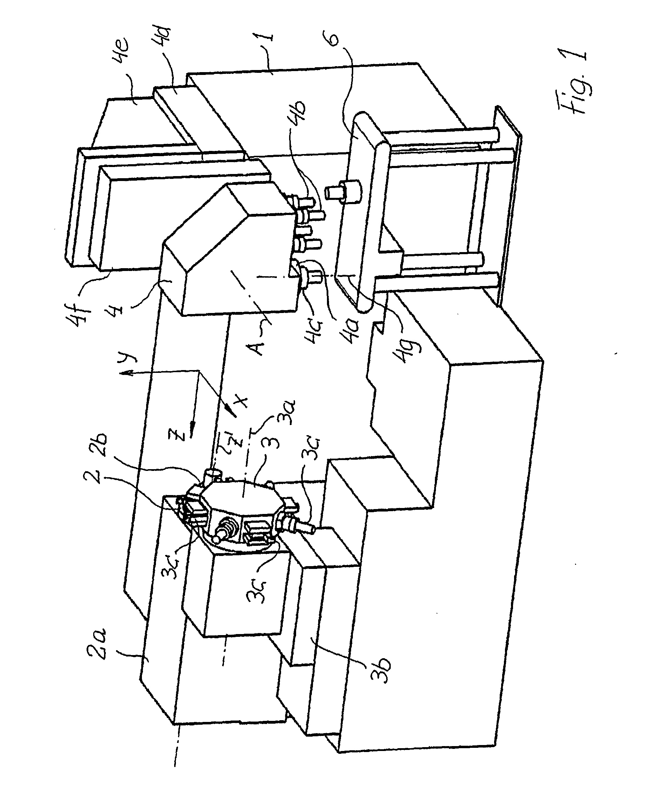

An einer Seite des Werkzeugträgers 4, in Fig. 1 an seiner nach unten weisenden Seite, sind Werkzeuge 4b aufgenommen. In dem Werkzeugträger 4 ist außerdem eine antreibbare Abgreifspindel 4a um eine Drehachse 4g rotierend gelagert, die an der die Werkzeuge 4b aufnehmenden Seite des zweiten Werkzeugträgers 4 eine Werkstückspannvorrichtung 4c trägt. Die Abgreifspindel 4a kann durch den Werkzeugträger 4 in eine horizontale Lage verschwenkt werden, in der sie durch Verfahren der Schlitten 4d, 4e und 4f der Hauptspindel 2 fluchtend gegenübergestellt werden kann, so daß ihre Spannvorrichtung 4c das von dem Spannfutter 2b gehaltene Werkstück übernehmen kann.

Unterhalb des Werkzeugträgers 4 in der in Fig. 1 dargestellten Position am rechten Ende des Maschinenbettes 1 ist eine Ablagefläche 6 vorgesehen, auf der das bearbeitete Werkstück von der Abgreifspindel 4a abgelegt werden kann. Der Werkzeugträger 4 wird dazu in Y-Richtung bis zur Auflage des Werkstücks auf der Aufnahme- bzw. Ablagefläche 6 verfahren. In umgekehrter Richtung kann auf gleiche Weise von der Abgreifspindel 4a auch ein Rohteil von der Aufnahmefläche 6 aufgenommen und zur Hauptspindel 2 transportiert werden. Die Anfahrposition auf der Ablage- und Aufnahmefläche 6 kann aus den Werkstückabmessungen von der Maschinensteuerung selbsttätig ermittelt werden. Sie kann aber auch durch Sensoren beispielsweise beim Auftreffen des Werkstücks auf die Ablagefläche 6 festgestellt werden.

Zur Bearbeitung des in der Abgreifspindel 4a gehaltenen Werkstücks ist über dem Spindelkasten 2a auf dem Maschinenbett 1 ein dritter Werkzeugträger 5 vorgesehen. Der Werkzeugträger 5 trägt in mehreren Reihen Innenbearbeitungswerkzeuge 5a, deren Längsachse sich in Z-Richtung erstreckt und in einer in Z-Richtung versetzten Reihe Außenbearbeitungswerkzeuge 5b, wie z. B. Drehmeißel, die sich in X-Richtung erstrecken.

Der dritte Werkzeugträger 5 kann stationär oder in Z-Richtung verschieblich sein. Ein gesteuerter Vorschub in Z-Richtung erleichtert die Möglichkeit, während der Bearbeitung des von der Abgreifspindel 4a gehaltenen Werkstücks mit Werkzeugen 5a und 5b des dritten Werkzeugträgers 5, ein von der Hauptspindel 2 gehaltenes Werkstück durch die Werkzeuge 4b des zweiten Werkzeugträgers zu bearbeiten. Dadurch werden die Bearbeitungszeiten erheblich verkürzt.

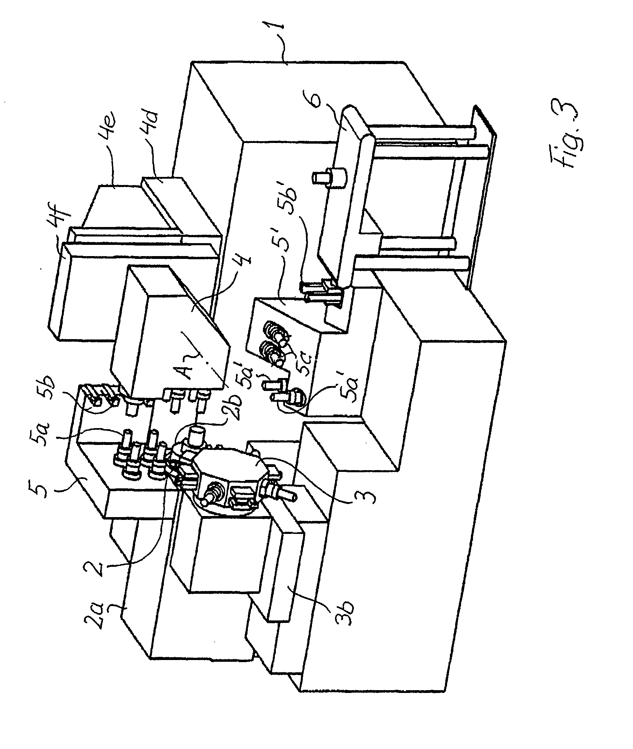

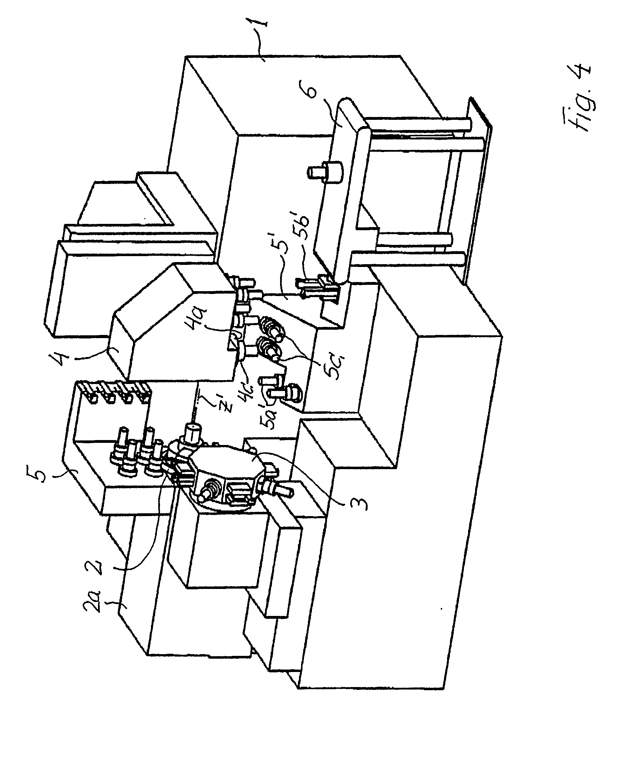

In einer weiteren Ausführungsform gemäß Fig. 3 und 4 kann ein dritter Werkzeugträger 5' stationär unterhalb des zweiten Werkzeugträgers 4 und unterhalb der nach unten weisenden Abgreifspindel 4a angeordnet sein. Dieser Werkzeugträger 5' kann ebenfalls Innenbearbeitungswerkzeuge 5a' und Außenbearbeitungswerkzeuge 5b', sowie Querbohrwerkzeuge 5c aufnehmen. Die Werkzeuge 5a', 5b' und 5c werden mittels des y-Schlittens 4f von der Abgreifspindel 4a angefahren. Der Werkzeugträger 5' kann auch zusätzlich zum Werkzeugträger 5 vorgesehen werden. Dadurch vergrößern sich die Bearbeitungsmöglichkeiten an dem von der Abgreifspindel 4a gehaltenen Werkstück. Die Bearbeitungswerkzeuge 5a, 5a' und 5c können in bekannter Weise rotierend antreibbar sein.

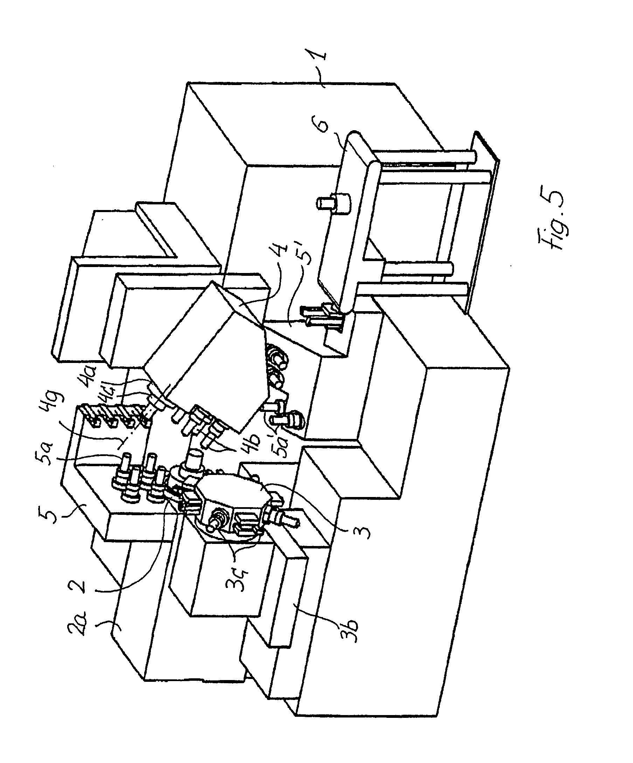

Wie insbesondere aus Fig. 5 erkennbar, ist der Werkzeugträger 4 in jede beliebige Winkelposition zur Z-Richtung verschwenkbar. Mit an seiner Stirnfläche angeordneten rotierend angetriebenen Werkzeugen 4b lassen sich dadurch zur Symmetrieachse des Werkstücks geneigte Bohrungen in das stillstehende, von der Hauptspindel 2 positionierte Werkstück einbringen. Der Werkzeugvorschub wird abhängig von der Werkzeugneigung durch synchron gesteuerte Bewegung des Z-Schlittens mit dem Y-Schlitten erzeugt. Bei Anordnung der Werkzeuge 4b und des von der Abgreifspindel 4a gehaltenen Werkstücks auf derselben Seite des zweiten Werkzeugträgers 4 kann sein Schwenkwinkel auf 180°, vorzugsweise auf etwas über 90° begrenzt werden. Alternativ können jedoch auch an anderen Umfangsflächen des zweiten Werkzeugträgers 4 Werkzeugträger angeordnet sein. In diesem Fall muß der Werkzeugträger 4 um mindestens 360° schaltbar sein.

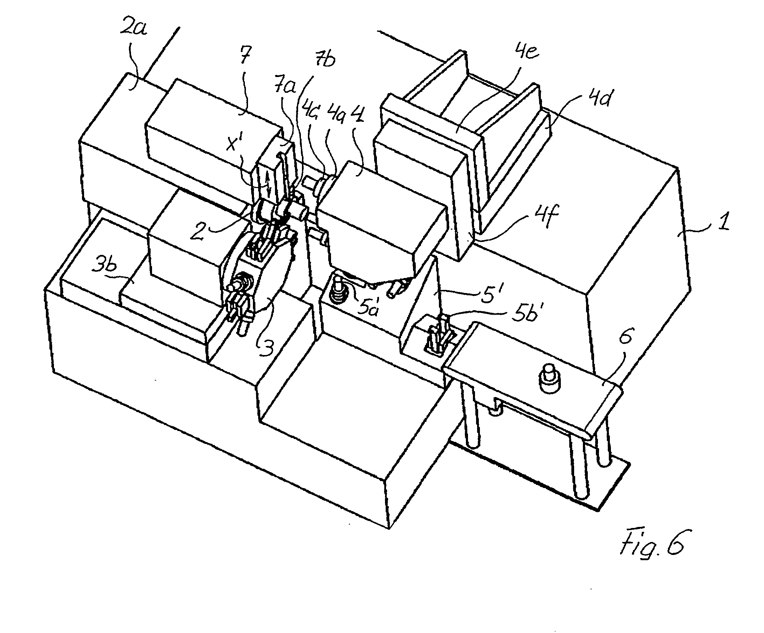

In einer weiteren Ausführungsform gemäß Fig. 6 kann an Stelle des Werkzeugträgers 5 oder zusätzlich ein vierter, als Stechschlitten 7a ausgebildeter Werkzeugträger 7 vorgesehen sein. Der Werkzeugträger 7 ist direkt an dem Spindelkasten 2a befestigt und weist an seiner Stirnseite den in X'-Richtung verschieblichen Stechschlitten 7a auf, an dem ein Formdrehmeißel oder ein Stechmeißel 7b befestigt ist. Eine Drehmaschine der in Fig. 6 gezeigten Ausführung ist besonders zur Stangenbearbeitung ausgebildet.

Eine Werkstoffstange wird von hinten durch die Hauptspindel 2 zugeführt und von dem Spannfutter 2b gespannt. Das in den Arbeitsraum ragende Ende wird dann von den Werkzeugen 3c des ersten Werkzeugträgers 3 vorzugsweise am Außenumfang und gleichzeitig von den Werkzeugen 4b des zweiten Werkzeugträgers 4 an der Stirnseite bearbeitet. Nach Abschluß der Bearbeitung des freien Endes wird das mit der Werkstoffstange noch zusammenhängende Ende in der Abgreifspindel 4a gespannt. Die Werkstoffstange wird von der Hauptspindel 2 und von der Abgreifspindel 4a winkelsynchron rotierend angetrieben. Der Stechschlitten 7a wird in X'-Richtung vorgeschoben, so daß der Abstechmeißel 7b ein Werkstück von der Werkstoffstange abtrennt.

Der zweite Werkzeugträger 4 verschwenkt das von der Abgreifspindel 4a gehaltene Werkstück anschließend in eine nach unten hängende Lage, in der es an seiner jetzt zugänglichen Rückseite von den Werkzeugen 5a' und 5b' des dritten Werkzeugträgers 5' bearbeitet werden kann. Schließlich wird das komplett bearbeitete Werkstück auf der Ablagefläche 6 abgelegt. Die Ablagefläche 6 kann durch einen Bereich eines Förderbandes gebildet sein, das das Werkstück seiner weiteren Verwendung zuführt.

## Patentansprüche

1. Drehmaschine mit einer stationären, um eine horizontale Achse drehend antreibbaren Hauptspindel (2) zur Aufnahme eines Werkstücks, mit einem ersten Werkzeugträger (3), der quer zur Hauptspindelachse (z') verschieblich ist, ferner mit einem zweiten Werkzeugträger (4), der um eine horizontale Schwenkachse (A) schwenkbar auf einem Schlitten (4d, 4e) gelagert ist, der in einer ersten Vorschubrichtung (z) parallel zur Hauptspindelachse (z') und quer dazu in einer zweiten Vorschubrichtung (x) verfahrbar ist, wobei der zweite Werkzeugträger (4) eine drehend antreibbare Abgreifspindel (4a) aufweist, die zur Übernahme des Werkstücks aus der Hauptspindel (2) ausgebildet ist, und wobei mindestens ein Werkzeug (4b) an der Seite des zweiten Werkzeugträgers (4) anbringbar ist, aus der die Abgreifspindel (4a) vorragt, ferner mit einem dritten Werkzeugträger (5; 5'; 5"), der zum Anbringen eines Werkzeugs (5a; 5b; 5a'; 5b') in einer zur Abgreifspindel (4a) weisenden Ausrichtung ausgebildet ist,
**dadurch gekennzeichnet,**
**daß** die horizontale Schwenkachse (A) des zweiten Werkzeugträgers (4) quer zur Hauptspindelachse (z') verläuft, und der zweite Werkzeugträger (4) in einer Vorschubrichtung (y) verfahrbar ist, die senkrecht zur ersten und zweiten Vorschubrichtung (z und x) verläuft, wobei die Abgreifspindel (4a) und das eine gleichgerichtete Werkzeug (4b) radial zur Schwenkachse (A) angeordnet sind und wobei unterhalb des zweiten Werkzeugträgers (4) eine der nach unten weisenden Abgreifspindel (4a) gegen-überliegende Ablage- oder Aufnahmefläche (6) für die Werkstücke vorgesehen ist.

2. Drehmaschine nach Anspruch 1,
**dadurch gekennzeichnet,**
**daß** der erste Werkzeugträger (3) zusätzlich in Richtung der Hauptspindelachse (z') verfahrbar ist.

3. Drehmaschine nach Anspruch 1 oder 2;
**dadurch gekennzeichnet,**
**daß** der erste Werkzeugträger (3) ein um eine parallel zur Hauptspindelachse (z') verlaufende Schaltachse (3a) schaltbarer Werkzeugrevolver ist.

4. Drehmaschine nach einem oder mehreren der Ansprüche 1 bis 3,
**dadurch gekennzeichnet,**
**daß** der dritte Werkzeugträger (5) neben oder über der Hauptspindel (2) angeordnet ist und daß dessen eines Werkzeug (5a; 5b) der Abgreifspindel (4a) in einer Schwenklage entgegengerichtet ist, in der die Drehachse (4g) der Abgreifspindel (4a) eine annähernd horizontale Lage aufweist.

5. Drehmaschine nach Anspruch 4,
**dadurch gekennzeichnet,**
**daß** der dritte Werkzeugträger (5) in Richtung der Hauptspindelachse (z') verfahrbar gelagert ist.

6. Drehmaschine nach einem oder mehreren der Ansprüche 1 bis 3,
**dadurch gekennzeichnet,**
**daß** der dritte Werkzeugträger (5') stationär unterhalb des zweiten Werkzeugträgers (4) angeordnet ist und daß dessen mindestens eines Werkzeug (5a'; 5b') der Abgreifspindel (4a) in einer Schwenklage des Werkzeugträgers (4) entgegengerichtet ist, bei der die Abgreifspindel (4a) vertikal nach unten weist.

7. Drehmaschine nach einem oder mehreren der Ansprüche 1 bis 6,
**dadurch gekennzeichnet,**
**daß** an dem dritten Werkzeugträger (5; 5') mehrere Werkzeuge (5a; 5b; 5a'; 5b') nebeneinander in einer Reihe angeordnet sind.

8. Drehmaschine nach Anspruch 7,
**dadurch gekennzeichnet,**
**daß** mehrere Werkzeuge (5a; 5b; 5a'; 5b') in zueinander parallelen Reihen angeordnet sind.

9. Drehmaschine nach einem oder mehreren der Ansprüche 1 bis 8,
**dadurch gekennzeichnet,**
**daß** an dem zweiten Werkzeugträger (4) außer der Abgreifspindel (4a) mehrere Werkzeuge (4b) befestigt sind.

10. Drehmaschine nach Anspruch 9,
**dadurch gekennzeichnet,**
**daß** mehrere Werkzeuge (4b) an der Seite des zweiten Werkzeugträgers (4) anbringbar sind, aus der die Abgreifspindel (4a) vorragt.

11. Drehmaschine nach Anspruch 9 oder 10,
**dadurch gekennzeichnet,**
**daß** mehrfach vorgesehene Werkzeuge (4b) in mindestens zwei in Richtung der Schwenkachse (B) des Werkzeugträgers (4) unterschiedlichen Ebenen angeordnet sind.

12. Drehmaschine nach einem oder mehreren der Ansprüche 1 bis 11,
**dadurch gekennzeichnet,**
**daß** unterhalb Abgreifspindel (4a) in deren vertikal nach unten weisender Schaltlage eine Werkstückzuführ- und/oder Werkstückabführvorrichtung (6) vorgesehen ist.

13. Drehmaschine nach Anspruch 12,
**dadurch gekennzeichnet,**
**daß** die Vorrichtung (6) ein umlaufendes Werkstücktransportband aufweist.

## Claims

1. Lathe with a stationary main spindle (2) which can be driven in rotation about a horizontal axis and holds a workpiece, with a first tool support (3) which is displaceable across the main spindle axis (z'), furthermore with a second tool support (4) which is mounted on a slide carriage (4d, 4e) to pivot about a horizontal pivotal axis (A) and which is movable in a first feed direction (z) parallel to the main spindle axis (z') and transversely thereto in a second feed direction (x) wherein the second tool support (4) has a rotationally driven gripper spindle (4a) which is designed to transfer the workpiece from the main spindle, and wherein at least one tool (4b) can be attached to the side of the second tool support (4) from which the gripper spindle (4a) projects, furthermore with a third tool support (5; 5'; 5") which is designed to attach a tool (5a; 5b; 5a'; 5b') in an orientation pointing towards the gripper spindle (4a),
**characterised in that**
the horizontal pivotal axis (A) of the second tool support (4) runs across the main spindle axis (z'), and the second tool support (4) is movable in a feed direction (y), which runs perpendicular to the first and second feed directions (z and x), wherein the gripper spindle (4a) and the one tool (4b) in the same direction are arranged radially to the pivotal axis (A) and wherein underneath the second tool support (4) there is a shelf or receiving surface (6) for the workpieces opposite the downward pointing gripper spindle (4a).

2. Lathe according to claim 1,
**characterised in that**
the first tool support (3) is movable additionally in the direction of the main spindle axis (z').

3. Lathe according to claim 1 or 2,
**characterised in that**
the first tool support (3) is a tool revolver which can be shifted about a shift axis (3a) running parallel to the main spindle axis (z').

4. Lathe according to one or more of claims 1 to 3,
**characterised in that**
the third tool support (5) is mounted next to or above the main spindle (2) and that its one tool (5a; 5b) is directed opposite the gripper spindle (4a) in a pivotal position in which the rotational axis (4g) of the gripper spindle (4a) has an approximately horizontal position.

5. Lathe according to claim 4,
**characterised in that**
the third tool support (5) is mounted movable in the direction of the main spindle axis (z').

6. Lathe according to one or more of claims 1 to 3,
**characterised in that**
the third tool support (5') is mounted stationary underneath the second tool support (4) and that its at least one tool (5a'; 5b') is directed opposite the gripper spindle (4a) in a pivotal position of the tool support (4) in which the gripper spindle (4a) points vertically downwards.

7. Lathe according to one or more of claims 1 to 6.
**characterised in that**
several tools (5a; 5b; 5a'; 5b') are arranged side by side in a row on the third tool support (5; 5').

8. Lathe according to claim 7,
**characterised in that**
several tools (5a; 5b; 5a'; 5b') are arranged in rows parallel to each other.

9. Lathe according to one or more of claims 1 to 8,
**characterised in that**
several tools (4b) are fixed on the second tool support (4) outside of the gripper spindle (4a).

10. Lathe according to claim 9,
**characterised in that**
several tools (4b) are attachable on the side of the second tool support (4) from which the gripper spindle (4a) projects.

11. Lathe according to claim 9 or 10,
**characterised in that**
multiple tools (4b) are mounted in at least two different planes in the direction of the pivotal axis (B) of the tool support (4).

12. Lathe according to one or more of claims 1 to 11,
**characterised in that**
a workpiece supply and/or workpiece discharge device (6) is/are provided underneath the gripper spindle (4a) in its shifted position pointing vertically downwards.

13. Lathe according to claim 12,
**characterised in that**
the device (6) has a circumferential workpiece conveyor belt.

## Revendications

1. Tour avec une broche principale (2) entraînée en rotation autour d'un axe horizontal, pour la réception d'une pièce, avec un premier porte-outil (3), qui peut être déplacé perpendiculairement à l'axe (z') de la broche principale, de plus, avec un deuxième porte-outil (4), qui, pivotant autour d'un axe de pivotement horizontal (A), est monté sur un chariot (4d, 4e), qui peut est conduit dans une première direction d'avance (z), parallèlement à l'axe (z') de la broche principale, et perpendiculairement à celle-ci dans une deuxième direction d'avance (x), le deuxième porte-outil (4) présentant une broche de manutention (4a) entraînée en rotation, qui est conçue pour la prise en charge d'une pièce en provenance de la broche principale (2), et au moins un outil (4b) pouvant être agencé sur le côté du deuxième porte-outil (4), à partir duquel la broche de manutention (4a) fait saillie, en outre avec un troisième porte-outil (5; 5'; 5"), qui est conçu pour amener un outil (5a; 5b; 5a'; 5b') en l'orientant vers la broche de manutention (4a),
**caractérisé en ce que**
l'axe de pivotement horizontal (A) du deuxième porte-outil (4) s'étend perpendiculairement à l'axe (z') de la broche principale, et que le deuxième porte-outil (4) peut être déplacé dans une direction d'avance (y) qui est orientée perpendiculairement à la première et à la deuxième direction d'avance (z et x), la broche de manutention (4a) et l'outil (4b) dirigé de même manière étant orientés dans le sens radial par rapport à l'axe de pivotement (A), et, au-dessous du deuxième porte-outil (4), une surface de dépôt ou de réception (6), opposée à la broche de manutention (4a) dirigée vers le bas, étant prévue pour les pièces.

2. Tour selon la revendication 1,
**caractérisé en ce que**
le premier porte-outil (3) peut être déplacé en plus en direction de l'axe (z') de la broche principale.

3. Tour selon la revendication 1 ou 2,
**caractérisé en ce que**
le premier porte-outil (3) est un revolver pouvant être commuté autour d'un axe de commutation (3a) s'étendant parallèlement à l'axe (z') de la broche principale.

4. Tour selon l'une ou plusieurs des revendications 1 à 3,
**caractérisé en ce que**
le troisième porte-outil (5) est disposé à côté ou au-dessus de la broche principale (2) et **en ce que** son outil (5a; 5b) est orienté à l'opposé de la broche de manutention (4a) dans une position de pivotement, dans laquelle l'axe de rotation (4g) de la broche de manutention (4a) présente une disposition approximativement horizontale.

5. Tour selon la revendication 4,
**caractérisé en ce que**
le troisième porte-outil (5) est monté, mobile en direction de l'axe de la broche principale (z').

6. Tour selon l'une ou plusieurs des revendications 1 à 3,
**caractérisé en ce que**
le troisième porte-outil (5') est agencé fixement au-dessous du deuxième porte-outil (4) et que son outil au moins prévu (5a'; 5b') est disposé à l'opposé de la broche de manutention (4a), dans une position de pivotement du porte-outil (4), dans laquelle la broche de manutention (4a) est orientée verticalement vers le bas.

7. Tour selon l'une ou plusieurs des revendications 1 à 6,
**caractérisé en ce que**,
sur le troisième porte-outil (5; 5'), plusieurs outils (5a; 5b; 5a'; 5b') sont disposés les uns à côtés des autres, sur une rangée.

8. Tour selon la revendication 7,
**caractérisé en ce que**
plusieurs outils (5a; 5b; 5a'; 5b') sont disposés en rangées parallèles les unes aux autres.

9. Tour selon l'une ou plusieurs des revendications 1 à 8,
**caractérisé en ce que**,
outre la broche de manutention (4a), plusieurs outils (4b) sont fixés au deuxième porte-outil (4).

10. Tour selon la revendication 9,
**caractérisé en ce que**
plusieurs outils (4b) peuvent être agencés sur le côté du deuxième porte-outil (4) hors duquel la broche de manutention (4a) fait saillie.

11. Tour selon la revendication 19 ou 10,
**caractérisé en ce que**
des outils (4b), prévus en plusieurs exemplaires, sont disposés sur au moins deux plans différents, en direction de l'axe de pivotement (B) du porte-outil (4).

12. Tour selon l'une ou plusieurs des revendications 1 à 11,
**caractérisé en ce que**,
au-dessous de la broche de manutention (4a), dans sa position de commutation orientée verticalement vers le bas, un dispositif d'amenée et / ou d'enlèvement de pièces (6) est prévu.

13. Tour selon la revendication 12,
**caractérisé en ce que**
le dispositif (6) présente une bande de transport de pièces tournante.
